# EUROPEAN PATENT SPECIFICATION

(11) **EP 1 820 758 B1**
(45) Date of publication and mention of the grant of the patent: **16.12.2009**
(21) Application number: 07102090.3
(22) Date of filing: 09.02.2007
(51) Int. Cl.: B65G 51/02, D06F 95/00

(54) **Apparatus and method for transporting textile**
Vorrichtung und Verfahren zum Transport von Textilwaren
Appareil et procédé de transport de textiles

(30) Priority: 15.02.2006 NL 1031154
(43) Date of publication of application: 22.08.2007
(73) Proprietor: Dunnmatiek B.V., 2142 EN CRUQUIUS (NL)
(72) Inventor: DUNNEWOLT, Arvid, 2930, BRASSCHAAT (BE)
(74) Representative: Aalbers, Arnt Reinier

(56) References cited:
- WO-A-03/070611
- DE-A1- 19 526 743
- DE-C- 629 178
- US-A- 3 416 841

## Description

The invention relates to an apparatus for transporting textile, comprising an enclosed passageway provided with an inlet and an outlet, means for generating an air flow in said passageway for the purpose of moving the textile ahead, and a vacuum box that can be sealed substantially hermetically. The invention further relates to a method for transporting textile.

Such apparatuses are known, they are used in laundries, for example, in particular industrial laundries. In industrial laundries the dirty laundry from, for example, hospitals, care institutions or catering establishments that is being supplied is sorted and washed. Said sorting is usually carried out manually.

US 4,849,999 discloses an apparatus for and method of moving textile articles such as pieces of laundry or the like according to the preamble of claim 1 and claim 8, the apparatus comprising an enclosed passageway having two opposing open ends, and at least one bend between the two open ends; a vacuum source coupled with one of the two open ends and developing a subatmospheric pressure along the passageway and at the other open end of the passageway to draw textile articles into the other open end and through the passageway to the one open end; and a sensor located at the one bend and sensing textile articles drawn through the passageway.

US 4,849,999 describes that the textile, after being counted by means of the sensor, is dropped from a vacuum box onto a conveyor for further processing.

Further, DE 195 26 743 relates to a procedure for repeated filling and emptying of a container with bulk material with a low density. The container is formed from a woven fabric which is air permeable and has at least one access opening. The product for filling the container is drawn through the access opening by applying a vacuum until the prescribed full weight is arrived at, and after this the opening is closed. An access opening for emptying of the container is connected to a discharge device and opened. The product by means of a vacuum unit is drawn into a ducting system or a depot until the container is evacuated and has folded up. The access opening is then resealed.

The object of the invention is to provide a more efficient apparatus for transporting and preferably also sorting textile.

That object is accomplished by the apparatus of claim 1.

The rail or rails and the trolley preferably form part of an overhead runway system, in which the trolleys are movably connected to an overhead conveyor by means of carriages. The trolleys are provided with a container, which is attached - preferably detachably - to at least one carriage.

The present invention in principle obviates the need for the aforesaid conveyor. In addition, textile can thus be loaded from such a vacuum transporting system into trolleys of an overhead runway system in an efficient manner without the vacuum box needing to be mounted above the rail or rails in its entirety. In this way the required height of the system is reduced.

In a first embodiment of the invention at least a part of the vacuum box is movable with respect to the rail or rails between a first position, in which the vacuum box is sealed substantially hermetically, and a second position, in which the vacuum box is open, in such a manner that a trolley can be placed into the vacuum box and/or be removed therefrom.

Thus it becomes possible to combine a vacuum box with a, possibly already existing, overhead runway system without drastic modifications to the system, in particular local modifications of the height of the system rail, being required. This may be important, for example in the case of overhead runway systems in which the trolleys are driven by gravity.

A relatively robust version of the apparatus, wherein the vacuum box can moreover be sealed substantially hermetically in a relatively simple manner is provided if the rail or rails is (are) present on or in the upper side of the vacuum box and a part of the vacuum box is movable between a relatively low position, in which the vacuum box is open and a trolley can be transported along or on the rail or rails, and a relatively high position, in which the vacuum box is sealed substantially hermetically.

In another embodiment the vacuum box is provided with one or more doors, for example in one or more side walls, via which a trolley can be placed into the vacuum box and/or be removed therefrom on or along the rail or rails.

An especially advantageous embodiment is provided with two or more passageways and two or more vacuum boxes, such that at least one passageway is in communication with one vacuum box via an outlet of said passageway and that at least one other passageway is in communication with another vacuum box via an outlet of said passageway, and that the inlets of passageways that are in communication with different vacuum boxes are grouped into one or more sorting points.

Using such an apparatus, dirty laundry, for example, can be transported and sorted in an efficient manner with few operations by loading selected textile, for example sheets, into a trolley and loading other textile, for example towels, into another trolley. It is preferable in this connection if the apparatus comprises at least as many vacuum boxes as types of textile intended for further processing. The various vacuum boxes may each be provided with a number of supply pipes, so that the textile intended for the same vacuum box, and thus for the same trolley, can be selected from several places.

An apparatus according to the invention is preferably provided with means for counting the textile being transported, which means are preferably mounted in the passageway or passageways, and/or with means for determining the degree of filling of a trolley.

The invention further relates to a method for transporting textile as defined in claim 8.

In this way the number of steps required for filling trolleys is reduced in an effective manner.

It is preferable in that case if a trolley is placed in the vacuum box, textile is loaded into the trolley and the entirely or partially filled trolley is removed from the vacuum box.

In this way a trolley is loaded from the enclosed passageway or supply pipe, so that the filling process will take place at an accelerated rate. Moreover, this method makes it possible to incorporate the vacuum box as part of the conveying system of the trolleys in such a manner that the height of the rail along with the trolleys move or are transported can remain substantially constant.

The method according to the invention is very suitable for sorting textile by transporting the textile to various vacuum boxes via various enclosed passageways or supply pipes and loading the textile into different trolleys in said vacuum boxes.

Using this method, textile can be sorted as well as loaded into trolleys, using a relatively small number of steps and/or operations.

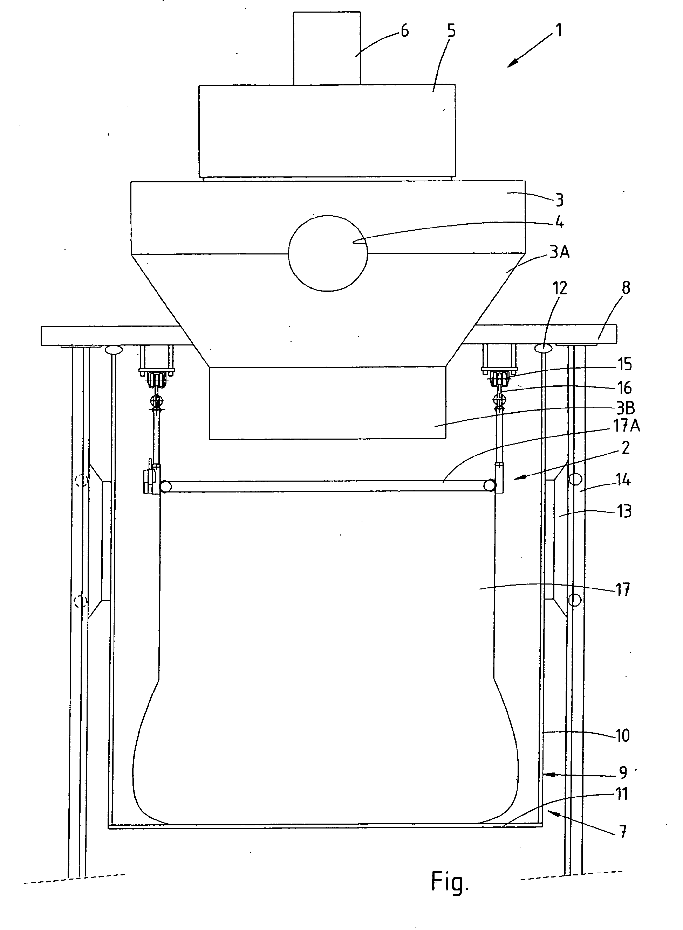

The invention will be explained in more detail hereinafter with reference to the appended figure, which schematically shows a preferred embodiment of the present invention.

The figure shows an apparatus 1 for transporting textile with a trolley 2 present therein. The apparatus 1 comprises a sorting shaft 3, which, in this embodiment, has a funnel-shaped shell 3A that terminates in a socket portion 3B. One or more supply pipes 4 is (are) connected to the sorting shaft 3. The sorting shaft 3 is also provided with a connection 5 to a vacuum pump 6. The apparatus 1 furthermore comprises a vacuum box 7, which is made up of an upper plate 8 and a vacuum container 9 comprising a side wall 10 and a bottom 11. At the upper side, the vacuum container 9 is provided with a flexible sealing edge 12, for example made of rubber, silicone or a similar material, which abuts against the underside of the upper plate 8 and which seals the vacuum box 7 substantially hermetically in the closed condition of the vacuum box 7.

The vacuum container 9 is preferably configured as a circular cylinder, so that inter alia the length of the sealing edge can remain within bounds and the risk of leakage is reduced.

The sorting shaft 3 is mounted on the upper side of the vacuum box 7. The funnel-shaped shell 3A of the sorting shaft 3 extends partially into the vacuum box 7 through the upper plate 8.

In the illustrated embodiment, the vacuum container 9 is movably connected to guide rails 14 via guide carriages 13. The vacuum container 9 can be moved up and down, between a relatively high position and a relatively low position by means of a drive unit (not shown) which is known per se (for example a pneumatic or a hydraulic cylinder).

Two parallel rails 15 of a suspended runway system which is known per se, for example from the advertising brochure "The Proper Way" of Dunnewolt Conveyors B.V., extend through the vacuum box 7. The illustrated trolley 2 is movably connected to the rails 15 by means of carriages 16. The trolley 2 is provided with a container 17, preferably a bag container made of a flexible material provided with a stiff upper edge 17A and with a closable opening at the bottom side, which container 17 is detachably attached to the carriages 16.

In the illustrated preferred embodiment, the lower part of the funnel-shaped shell 3A and the socket portion 3B extend into the vacuum box 7 between the rails 15, so that the textile is directly deposited from a supply pipe 4 into the trolley 2 via the sorting shaft 3 when a trolley is present in the vacuum box.

When using the invention, the air in the vacuum box 7 is evacuated by the vacuum pump 6 to generate a medium-high vacuum therein, for example to a vacuum pressure between 0.8 bar and 0.2 bar, preferably about 0.5 bar. As a result, an air pressure difference is created, and thus an air flow between the inlet (not shown) and the outlet of each supply pipe 4 connected to the sorting shaft 3 of the apparatus 1. Textile, for example laundry items, is transported by the air flow to the sorting shaft 3 via the supply pipes 4. The funnel-shaped shell 3A and the socket portion 3B receive the textile and guide them into the vacuum box 7, so that the textile fall into the container 17 of the trolley 2.

The sorting shaft 3 is preferably provided with a grate or with other means that prevent the textile from being transported further in the direction of the vacuum pump 6.

To exchange the trolley 2, the vacuum in the vacuum box 7 is reduced or entirely released, for example by turning off the vacuum pump 6 or by closing a valve in the passageway between the vacuum box 7 and the vacuum pump 6. After the vacuum box 7 has been opened, in this example by transporting the vacuum container 9 from a relatively high position to a relatively low position on the guide rails 14, the entirely or partially filled trolley 2 is carried off and exchanged for an empty one by placing the latter on the rails 15 below the socket portion 3B. The vacuum box is subsequently closed again, in this example by returning the vacuum container to the relatively high position, so that the flexible sealing edge 12 seals the vacuum box 7 substantially hermetically against the upper plate 8 and the vacuum in the vacuum box 7, and thus the air flow in the supply pipes 4, can be restored.

The movement of the vacuum container and 9 may generally also have another component besides only a vertical component, for example a partial rotary motion about a substantially horizontal axis.

The apparatus 1 may be disposed in such a manner that the height of the rails of the suspended runway system at the location of the apparatus 1 can remain unchanged with respect to the rest of the system. If only a single rail is used in the remaining suspended runway system, the carriages 16 of the trolley 2 may be guided onto the two parallel rails 15 of the apparatus 1 by means of switches. The switches may be disposed inside or outside the vacuum box 7.

The vacuum box 7 may also have a basic shape other than a round shape, for example a rectangular or a square shape.

By providing the vacuum box 7 with one or more doors or valves, for example the size of an entire side wall 10, in a known manner, which doors or valves seal the vacuum box 7 substantially hermetically in their closed position, a trolley 2 can be placed into the vacuum box 7. This configuration may for example be used if there is no possibility to realise or use the vacuum box 7 in the above-described manner, for example if there is insufficient space for lowering the vacuum container 9.

An assembly consisting of a number of passageways 4 and vacuum boxes 7 is highly suitable for sorting textile. With such an assembly, selected textile can be transported through a passageway 4 to a specific vacuum box 7, and thus to a specific trolley 2, and other types of textile can be transported to another vacuum box 7, and thus to another trolley 2, via another supply pipe 4. When such an assembly is used, one or more apparatuses 1 are preferably provided with one, two or more supply pipes 4, so that different inlets may be used for loading textile into the same trolley 2. Preferably, the inlets of the supply pipes 4 that lead to different vacuum boxes 7 are somehow grouped into sorting points.

For administrative purposes and/or for checking the filling of a trolley, the apparatus 1 is preferably provided with means for counting the textile being transported through the passageways 4, for example in the form of a sensor disposed in each of the supply pipes 4. Furthermore, the apparatus 1 may be provided, preferably in or localised at the vacuum box 7, with means for determining and/or checking the filling degree of a trolley 2, for example a weighing unit or an optical system, such as a video camera. This makes it possible to determine the right moment for exchanging an entirely or partially filled trolley 2 for an empty trolley 2.

It stands to reason that the invention is not limited to the embodiments as described in the foregoing, which may be varied in several ways without departing from the scope of the invention as defined in the claims.

Thus, more than one apparatus 1 may be connected to a single vacuum pump 6, for example. Furthermore, the sorting shaft 3 may be configured in various ways or even be left out altogether if the supply pipes 4 and the vacuum pump are directly mounted on (the upper plate 8 of) the vacuum box 7. The supply pipes 4 may also be entirely or partially configured as hoses or other types of enclosed passageways.

Furthermore it is possible to use the invention in, for example, a conveying system in which the trolleys 2 are not suspended from a rail 15 or rails 15 but roll on the rails 15 as wagons. The vacuum box 7 may also be configured such that the rail or rails 15 are disposed outside the vacuum box 7, whilst the container 17 of the trolley 2 can be placed inside the vacuum box 7. To that end the vacuum box 7 is for example provided with openings or passageways, which can preferably be sealed substantially hermetically, in such a manner that the connecting parts between the container 17 and the carriage 16 or the carriages 16 of the trolley 2 can extend therethrough.

The vacuum box 7 may also be provided with a device for driving (the carriages 16 of) trolleys 2. Furthermore, the operation of the apparatus 1 may be partially or entirely automated and/or computer-controlled.

## Claims

1. An apparatus (1) for transporting textile, comprising an enclosed passageway (4) provided with an inlet and an outlet, means for generating an air flow in said passageway (4) for the purpose of moving the textile ahead, and a vacuum box (7) that can be sealed substantially hermetically, **characterised by** at least one rail (15) for guiding trolleys (2), which rail (15) or rails (15) extend(s) along or through the vacuum box (7), in such a manner that a trolley (2) connected thereto can be placed into the vacuum box (7) and be filled with the textile.

2. An apparatus (1) according to claim 1, wherein at least a part (9,11) of the vacuum box (7) is movable with respect to the rail (15) or rails (15) between a first position, in which the vacuum box (7) is sealed substantially hermetically, and a second position, in which the vacuum box (7) is open, in such a manner that a trolley (2) can be placed into the vacuum box (7) and/or be removed therefrom.

3. An apparatus (1) according to claim 2, wherein the rail (15) or rails (15) is (are) present on or in the upper side of the vacuum box (7) and wherein a part (11) of the vacuum box (7) is movable between a relatively low position, in which the vacuum box (7) is open, and a relatively high position, in which the vacuum box (7) is sealed substantially hermetically.

4. An apparatus (1) according to claim 1, 2 or 3, wherein the vacuum box (7) is provided with one or more doors, via which a trolley (2) can be placed into the vacuum box (7) and/or be removed therefrom.

5. An apparatus (1) according to any one of the preceding claims, provided with two or more passageways (4) and two or more vacuum boxes (7), such that at least one passageway (4) is in communication with one vacuum box (7) via an outlet of said passageway (4) and that at least one other passageway (4) is in communication with another vacuum box (7) via an outlet of said passageway (4), and that the inlets of passageways (4) that are in communication with different vacuum boxes (7) are grouped into one or more sorting points.

6. An apparatus (1) according to any one of the preceding claims, which is provided with means for counting the textile being transported, which means are preferably mounted in the passageway (4) or passageways (4).

7. An apparatus (1) according to any one of the preceding claims, which is provided with means for determining the filling degree of a trolley (2).

8. A method for transporting textile, to a vacuum box (7) through an enclosed passageway (4) by means of an air flow in said passageway (4), **characterized in that** the textile is loaded into a trolley (2) placed into the vacuum box (7).

9. A method according to claim 8, wherein a trolley (2) is placed in the vacuum box (7), textile is loaded into the trolley (2) and the entirely or partially filled trolley (2) is removed from the vacuum box (7).

10. A method according to claim 8 or 9, wherein textile is sorted by transporting them to various vacuum boxes (7) via various enclosed passageways (4) and loading the textile into different trolleys (2) in said vacuum boxes (7).

## Patentansprüche

1. Vorrichtung (1) für das Transportieren von Textilien, aufweisend einen geschlossenen Durchgang (4), der einen Einlass und einen Auslass aufweist, Mittel zum Erzeugen eines Luftstroms in dem Durchgang (4) zum Zweck des Vorwärtsbewegens der Textilien, und einen Vakuumkasten (7), der im Wesentlichen hermetisch abgedichtet werden kann, **gekennzeichnet durch** mindestens eine Schiene (15) zum Führen von Transportwägen (2), wobei sich die Schiene (15) oder die Schienen (15) entlang des Vakuumkastens (7) oder durch diesen hindurch erstreckt/erstrecken, so dass ein daran angeschlossener Transportwagen (2) in dem Vakuumkasten (7) platziert und mit den Textilien gefüllt werden kann.

2. Vorrichtung (1) gemäß Anspruch 1, wobei mindestens ein Teil (9, 11) des Vakuumkastens (7) relativ zu der Schiene (15) oder den Schienen (15) zwischen einer ersten Position, in welcher der Vakuumkasten (7) im Wesentlichen hermetisch abgedichtet ist, und einer zweiten Position, in welcher der Vakuumkasten (7) offen ist, bewegbar ist, so dass ein Transportwagen (2) in dem Vakuumkasten (7) positioniert und/oder aus diesem entfernt werden kann.

3. Vorrichtung (1) gemäß Anspruch 2, wobei die Schiene (15) oder die Schienen (15) an oder in der oberen Seite des Vakuumkastens (7) positioniert ist/sind, und wobei ein Teil (11) des Vakuumkastens (7) zwischen einer relativ abgesenkten Position, in welcher der Vakuumkasten (7) offen ist, und einer relativ erhöhten Position, in welcher der Vakuumkasten (7) im Wesentlichen hermetisch abgedichtet ist, bewegbar ist.

4. Vorrichtung (1) gemäß Anspruch 1, 2 oder 3,
wobei der Vakuumkasten (7) mit einer oder mehreren Türen versehen ist, über die ein Transportwagen (2) in dem Vakuumkasten (7) platziert und/oder aus diesem entfernt werden kann.

5. Vorrichtung (1) gemäß einem der vorhergehenden Ansprüche, die mit zwei oder mehr Durchgängen (4) und zwei oder mehr Vakuumkästen (7) versehen ist, so dass mindestens ein Durchgang (4) über einen Auslass des Durchgangs (4) mit einem Vakuumkasten (7) in Verbindung ist, und mindestens ein anderer Durchgang (4) über einen Auslass des Durchgangs (4) mit einem anderen Vakuumkasten (7) in Verbindung ist, und die Einlässe von Durchgängen (4), die mit verschiedenen Vakuumkästen (7) in Verbindung sind, zu einem oder mehreren Sortierpunkten gruppiert sind.

6. Vorrichtung (1) gemäß einem der vorhergehenden Ansprüche, die mit Mitteln zum Zählen der transportierten Textilien versehen ist, wobei die Mittel vorzugsweise in dem Durchgang (4) oder in den Durchgängen (4) montiert sind.

7. Vorrichtung (1) gemäß einem der vorhergehenden Ansprüche, die mit Mitteln zum Bestimmen des Füllungsgrades eines Transportwagens (2) versehen ist.

8. Verfahren zum Transportieren von Textilien in einen Vakuumkasten (7) durch einen geschlossenen Durchgang (4) hindurch mittels eines Luftstroms in dem Durchgang (4), **dadurch gekennzeichnet, dass** die Textilien in einen Transportwagen (2) geladen werden, der in dem Vakuumkasten (7) platziert wird.

9. Verfahren gemäß Anspruch 8, wobei ein Transportwagen (2) in dem Vakuumkasten (7) positioniert wird, Textilien in den Transportwagen (2) geladen werden und der vollständig oder teilweise gefüllte Transportwagen (2) aus dem Vakuumkasten (7) entfernt wird.

10. Verfahren gemäß Anspruch 8 oder 9, wobei die Textilien sortiert werden, indem sie über verschiedene abgeschlossene Durchgänge (4) zu verschiedenen Vakuumkästen (7) transportiert werden, und indem die Textilien in verschiedene Transportwägen (2) in den Vakuumkästen geladen werden.

## Revendications

1. Appareil (1) pour transporter un textile, comprenant un passage cloisonné (4) muni d'une entrée et d'une sortie, un moyen pour générer un courant d'air dans ledit passage (4) afin de déplacer le textile vers l'avant, et une boîte à vide (7) qui peut être rendue sensiblement hermétique, **caractérisé par** au moins un rail (15) pour guider des chariots (2), le ou les rails (15) s'étendant le long ou à travers la boîte à vide (7), de telle manière qu'un chariot (2) lui étant raccordé puisse être placé dans la boîte à vide (7) et rempli de textile.

2. Appareil (1) selon la revendication 1, dans lequel au moins une partie (9, 11) de la boîte à vide (7) peut être déplacée par rapport au rail (15) ou aux rails (15) entre une première position, dans laquelle la boîte à vide (7) est rendue sensiblement hermétique, et une deuxième position, dans laquelle la boîte à vide (7) est ouverte, de telle manière qu'un chariot (2) puisse être placé dans la boîte à vide (7) et/ou retiré de celle-ci.

3. Appareil (1) selon la revendication 2, dans lequel le ou les rails (15) sont présents sur ou dans le côté supérieur de la boîte à vide (7) et dans laquelle une partie (11) de la boîte à vide (7) peut être déplacée entre une position relativement basse, dans laquelle la boîte à vide (7) est ouverte, et une position relativement haute, dans laquelle la boîte à vide (7) est rendue sensiblement hermétique.

4. Appareil (1) selon la revendication 1, 2 ou 3, dans lequel la boîte à vide (7) est munie d'une ou plusieurs portes, par lesquelles un chariot (2) peut être placé dans la boîte à vide (7) et/ou retiré de celle-ci.

5. Appareil (1) selon l'une quelconque des revendications précédentes, muni de deux passages (4) ou plus, de sorte qu'au moins un passage (4) communique avec une boîte à vide (7) par l'intermédiaire d'une sortie dudit passage (4) et qu'au moins un autre passage (4) communique avec une autre boîte à vide (7) par l'intermédiaire d'une sortie dudit passage (4), et que les entrées des passages (4) qui communiquent avec différentes boîtes à vide (7) soient groupées en un ou plusieurs points de tri.

6. Appareil (1) selon l'une quelconque des revendications précédentes, qui est muni d'un moyen pour compter le textile transporté, le moyen étant de préférence monté dans le ou les passages (4).

7. Appareil (1) selon l'une quelconque des revendications précédentes, qui est muni d'un moyen pour déterminer le degré de remplissage d'un chariot (2).

8. Procédé pour transporter un textile, vers une boîte à vide (7) par un passage cloisonné (4) au moyen d'un courant d'air dans ledit passage (4), **caractérisé en ce que** le textile est chargé dans un chariot (2) placé dans la boîte à vide (7).

9. Procédé selon la revendication 8, dans lequel un chariot (2) est placé dans la boîte à vide (7), le textile est chargé dans le chariot (2) et le chariot (2) entièrement ou partiellement rempli est retiré de la boîte à vide (7).

10. Procédé selon la revendication 8 ou 9, dans lequel le textile est trié en le transportant vers différentes boîtes à vide (7) par l'intermédiaire de différents passages cloisonnés (4) et en chargeant le textile dans différents chariots (2) dans lesdites boîtes à vide (7).
